# EUROPEAN PATENT APPLICATION

(11) **EP 4 691 887 A1**
(43) Date of publication of application: **11.02.2026**
(21) Application number: 24830324.0
(22) Date of filing: 24.05.2024
(51) Int. Cl.: B62D 25/08, B60G 17/04

(54) **VEHICLE BODY STRUCTURE AND VEHICLE**

(30) Priority: 29.06.2023 CN 202310788057
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LIU, Qun, Ningbo, Zhejiang 315899 (CN); ZHOU, Jinbo, Ningbo, Zhejiang 315899 (CN); MAO, Yun, Ningbo, Zhejiang 315899 (CN); DUAN, Zhixiang, Ningbo, Zhejiang 315899 (CN); DUAN, Yanyan, Ningbo, Zhejiang 315899 (CN); WANG, Bing, Ningbo, Zhejiang 315899 (CN); ZHAO, Xiaonan, Ningbo, Zhejiang 315899 (CN)
(74) Representative: Michalski Hüttermann & Partner Patentanwälte mbB
(86) International application number: PCT/CN2024/095235
(87) International publication number: WO 2025/001676

(57) **Abstract**

A vehicle body structure and a vehicle are disclosed. The vehicle body structure includes longitudinal beams (11), a cross beam (12), a trunk (13), an air tank (14), an air pump (15), and a rear suspension (23). The longitudinal beams (11) and the cross beam (12) are connected with each other, and the longitudinal beams (11) and the cross beam (12) are arranged to support other structural components of the vehicle body structure. The longitudinal beams (11) extend into the trunk (13). The air pump (15) is connected with one of the longitudinal beams (11) extending into the trunk (13). The air pump (15) and the air tank (14) are at both sides of a central axis of the vehicle body structure respectively, and are located close to the rear suspension (23).

## Description

### CROSS-REFERENCE TO RELATED APPLICATIONS

This application claims priority to Chinese Patent Application No. 202310788057.1 filed with the Chinese Patent Office on June 29, 2023, the entire content of which is incorporated herein by reference.

### TECHNICAL FIELD

Embodiments of the present disclosure relate to, but are not limited to, the technical field of automotive manufacturing, and particularly relate to, but are not limited to, a vehicle body structure and a vehicle.

### BACKGROUND

As technology develops, vehicles are increasingly appearing in people's lives. People's demands for vehicles are also becoming higher and higher.

### SUMMARY

Below is a summary of the subject matters described in detail herein. The summary is not intended to limit the protection scope of the claims.

According to a first aspect of the embodiments of the present disclosure, there is provided a vehicle body structure, including: longitudinal beams, a cross beam, a trunk, an air tank, an air pump, and a rear suspension; where the longitudinal beams and the cross beam are connected with each other, and the longitudinal beams extend into the trunk; the air pump is connected with one of the longitudinal beams extending into the trunk; and the air pump and the air tank are at both sides of a central axis of the vehicle body structure respectively, and are located close to the rear suspension.

With such a design, when the vibration is transmitted to the longitudinal beams, the longitudinal beams can block most of the vibration, which can achieve a good effect of reducing the vibration. Therefore, the air pump is connected with the longitudinal beams, and part of the vibration generated by the air pump can be blocked by the longitudinal beams, thereby reducing the influence of the vibration generated by the air pump on the vehicle body structure. Further, the riding experience of the vehicle and the operation stability of other systems can be improved.

In addition, the air pump and the air tank are at both sides of the central axis of the vehicle body structure respectively, i.e., the space occupied by the air pump and the air tank in the vehicle length direction is shortened, such that the air pump and the air tank arranged in this way can adapt to various different rear suspension lengths, and the rear suspension length is the length from the center of the rear wheel of the vehicle to the rear end of the vehicle. Therefore, the aforementioned arrangement of the air pump and air tank can adapt to a wider range of vehicle models.

In some embodiments, the trunk includes an expansion floor and a rear enclosure panel; the rear enclosure panel is connected with an end of the longitudinal beams; in a region enclosed by the longitudinal beams, the cross beam, and the rear enclosure panel, lower surfaces of the longitudinal beams, the cross beam, and the rear enclosure panel are connected with the expansion floor and flush with each other; and a recessed structure formed by extending the expansion floor downward is used as an expansion portion, and the air pump and the air tank are at both sides of the expansion portion along the central axis respectively.

With such a design, since the expansion portion is closest to the rearmost of the trunk, the quantity of structures that may interfere with the expansion portion can be minimized, thereby preventing the expansion portion from excessively interfering with the arrangement of other structures and preventing other structures from affecting the arrangement of the expansion portion. At the same time, since the air tank and the air pump are at both sides of the expansion portion along the central axis respectively, the space behind the rear suspension of the vehicle can also be utilized to the greatest extent, which can improve the overall space utilization efficiency of the vehicle.

In some embodiments, the vehicle body structure further includes an adapter bracket. The adapter bracket is between the air pump and the longitudinal beam, and the adapter bracket includes air pump connection portions and longitudinal beam connection portions. The air pump connection portions are connected with the air pump, and the longitudinal beam connection portions are connected with the longitudinal beam. The air pump connection portions are at both sides of all the longitudinal beam connection portions.

Vibration can be better blocked by providing the adapter bracket, i.e., some vibration of the air pump is further blocked by the adapter bracket, such that the vehicle body structure can have a better vibration elimination effect, which can further reduce the influence of the vibration generated by the air pump on the vehicle body structure.

The length between the fixing points of the air pump can also be increased by the adapter bracket, i.e., the distance between the fixing points of the air pump and the longitudinal beam is changed to a bigger distance, i.e., the distance between the air pump connection portions, thereby improving the fixing stability of the air pump.

In some embodiments, the air pump connection portions and the longitudinal beam connection portions are at a same plane and at a same straight line. A cross-section of the adapter bracket, perpendicular to the straight line connecting the air pump connection portions and the longitudinal beam connection portions, is recess-shaped, and a cavity is provided in a flange of the adapter bracket.

With such a design, the adapter bracket can better block vibration, such that the vehicle body structure can have a better vibration elimination effect, which can further reduce the influence of the vibration generated by the air pump on the vehicle body structure. A cavity is provided in the flange of the adapter bracket, which can improve the ability of the adapter bracket to resist vibration deformation, which can further enhance the ability of the adapter bracket to block vibration transmission.

In some embodiments, the vehicle body structure further includes: an air pump bracket. The air pump bracket includes a first fitting portion, second fitting portions, and third fitting portions. The first fitting portion is connected with the longitudinal beam. The second fitting portions are connected with the adapter bracket. The third fitting portions are connected with the air pump. Lines connecting projections of the first fitting portion and the second fitting portions onto a same plane form a triangle.

In this way, a smaller area where the air pump can provide to fit with other parts can be replaced with a larger area, which can thus reduce the connection difficulty of the air pump and improve the assembling stability of the air pump.

In some embodiments, the vehicle body structure further includes a first vibration isolation structure and a second vibration isolation structure. The first vibration isolation structure is between the air pump and the air pump bracket. The second vibration isolation structure is between the first fitting portion of the air pump bracket and the longitudinal beam, and between the second fitting portion of the air pump bracket and the adapter bracket. The first vibration isolation structure includes a composite structure of a spring and a rubber bushing, and the second vibration isolation structure includes a rubber bushing.

With such a design, the first vibration isolation structure and the second vibration isolation structure can better block the vibration generated by the air pump, such that the vehicle body structure can have a better vibration elimination effect, thereby further improving the riding experience of the vehicle and the operation stability of other systems.

In some embodiments, the vehicle body structure further includes: hitching brackets. The hitching brackets are mounted at both sides of the air pump bracket, and the hitching brackets and the second fitting portions are at a same straight line. The hitching bracket includes a hook portion extending upward with a hook shape. The adapter bracket further includes hitching fitting portions. The hitching fitting portions are at both sides of all the air pump connection portions, and at one side of the adapter bracket, the air pump connection portion is between the hitching fitting portion and the longitudinal beam connection portion. The hitching fitting portion is provided with an opening, and the hook portion and the opening of the hitching fitting portion are correspondingly fitted when assembled.

By providing the hook portion and the hitching fitting portion that are correspondingly fitted, upon obtaining the first intermediate structure by connecting the air pump and the air pump bracket, as well as the hitching bracket, and upon obtaining the second intermediate structure by connecting the adapter bracket and the longitudinal beam, when the two intermediate structures are assembled, the hook portion can be hung into the opening of the hitching fitting portion, such that workers can be prevented from lifting the air pump and the air pump bracket all the time during assembling, thereby reducing worker fatigue and improving assembling efficiency. In addition, when automated assembling is used, such the design can also avoid providing a special mechanical structure for lifting, such that the mechanical structure for performing assembling can be simplified, which can reduce costs.

In some embodiments, a height of the hitching fitting portion is lower than that of the air pump connection portion and the longitudinal beam connection portion. After assembling is completed, a clearance distance is maintained between the hook portion and the hitching fitting portion. The hitching fitting portion includes an inclined connection structure, and is connected with the air pump connection portion through the inclined connection structure.

With such a design, a fitting space may be reserved for the hook portion, such that the hook portion is more easily fitted with the hitching fitting portion, which can improve the ease of the assembling operation. By providing the inclined connection structure, the downward force exerted by the air pump and associated structures connected thereto on the air pump connection portion can be decomposed, such that the bending force perpendicular to the surface of the inclined connection structure can be reduced, thereby improving the strength of the inclined connection structure and improving the mounting stability in the assembling process.

In some embodiments, the vehicle body structure further includes: a distribution valve. The distribution valve is on the hitching bracket, and is configured to direct an airflow generated by the air pump into different pneumatic circuits.

In some embodiments, the vehicle body structure further includes: a base plate and a cover plate. The base plate is on top of the cross beam and the longitudinal beams, and is at a side of the cross beam away from the expansion portion, with the cross beam being in contact with the expansion portion. The cover plate is detachably on top of the cross beam and the longitudinal beams, and is at a side of the cross beam facing the expansion portion, with the cross beam being in contact with the expansion portion. The cover plate is flush with the base plate.

By providing the cover plate flush with the base plate, the expansion portion can be temporarily closed in this case, and a flat placement space is left, which may enable users to flexibly choose different placement space modes of the trunk according to actual situations.

In some embodiments, each of the longitudinal beams includes a first lap flange extending from a bottom of the longitudinal beam; the cross beam includes a third lap flange extending from a bottom of the cross beam; and the expansion floor includes a second lap flange of the expansion portion extending from a top end of the expansion portion, and the second lap flange is configured to be in lap-joint fit with the first lap flange and the third lap flange to fix the expansion portion.

In some embodiments, the first lap flange and the longitudinal beam, the third lap flange and the cross beam, and the second lap flange and the expansion portion are integrally formed, respectively.

In some embodiments, the longitudinal beams and the cross beam are used to support other structural components of the vehicle body structure.

According to a second aspect of the present disclosure, there is provided a vehicle, including any one of the foregoing vehicle body structures. The power system of the vehicle does not include a tailpipe muffler structure.

With such a design, the interference between the provided expansion portion and the tailpipe muffler structure can be avoided, such that the trunk of the vehicle can be expanded through the expansion portion without affecting the operation of the vehicle.

It should be understood that, both the foregoing general description and the following detailed description are exemplary and explanatory only and are not restrictive of the present disclosure. Other aspects can be understood upon reading and understanding the drawings and the detailed description.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a partial structural diagram of a vehicle body structure according to an embodiment of the present disclosure.
FIG. 2 is a bottom view of a partial structure of a vehicle body structure according to an embodiment of the present disclosure.
FIG. 3 is a cross-sectional view along section line A-A in FIG. 1 according to an embodiment of the present disclosure.
FIG. 4 is a cross-sectional view along section line B-B in FIG. 1 according to an embodiment of the present disclosure.
FIG. 5 is a schematic diagram of an assembly of an air pump and related structures according to an embodiment of the present disclosure.
FIG. 6 is a structure diagram of an adapter bracket according to an embodiment of the present disclosure.
FIG. 7 is a schematic diagram of a connection between an adapter bracket and a longitudinal beam according to an embodiment of the present disclosure.
FIG. 8 is an exploded view of the assembly in FIG. 5 except for an adapter bracket according to an embodiment of the present disclosure.

### Reference Numerals:

10, vehicle body structure; 11, longitudinal beam; 111, first lap flange; 12, cross beam; 121, third lap flange; 13, trunk; 131, Rear enclosure panel; 132, expansion portion; 1321, second lap flange; 133, expansion floor; 14, air tank; 15, air pump; 16, adapter bracket; 161, longitudinal beam connection portion; 162, air pump connection portion; 163, hitching fitting portion; 1631, opening; 1632, inclined connection structure; 164, cavity; 17, air pump bracket; 171, first fitting portion; 172, second fitting portion; 173, third fitting portion; 181, first vibration isolation structure; 182, second vibration isolation structure; 19, hitching bracket; 191, hook portion; 20, distribution valve; 21, base plate; 22, cover plate; 23, rear suspension; X: central axis; Y, length direction; Z, height direction; A-A, section line; B-B, section line; Q1, region; Q2, region.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects of the present disclosure as detailed in the appended claims.

With the improvement of living standards, people have a need to carry out various activities through cars, such as camping through vehicles, and these activities have put forward higher requirements on the storage space of vehicles. Since the vehicle needs to balance the stability during driving and the vehicle passability, it is necessary to provide an air suspension system in the vehicle. Providing an air suspension system requires providing an air tank, an air pump, etc., in a vehicle body structure of a vehicle. Considering various factors of the body structure design of the vehicle, the air tank and the air pump generally need to be arranged at the trunk of the vehicle. However, when the air tank and the air pump are arranged at the trunk, it not only occupies space at the rear of the vehicle, limiting the expansion of the trunk space, but also is not conducive to addressing the vibration caused by the air pump during operation.

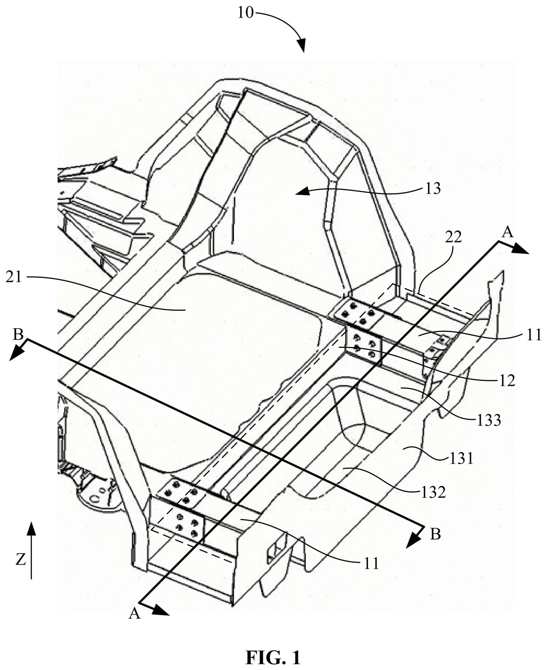

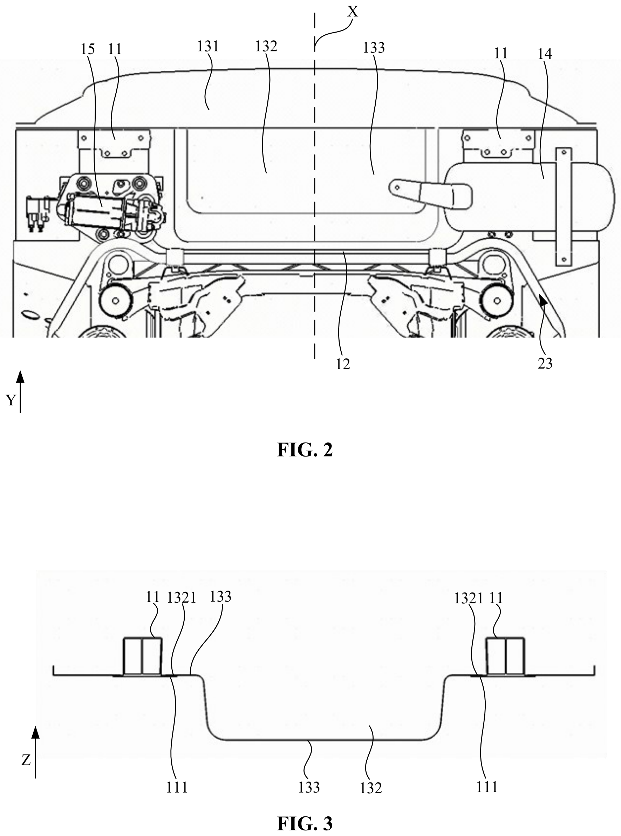

An embodiment of the present disclosure provides a vehicle body structure 10. FIG. 1 shows partial structural diagram of the vehicle body structure 10, and FIG. 2 shows bottom view of a partial structure of the vehicle body structure 10. As shown in FIG. 1 and FIG. 2, the vehicle body structure 10 includes longitudinal beams 11, a cross beam 12, a trunk 13, an air tank 14, an air pump 15, and a rear suspension 23.

The longitudinal beams 11 and the cross beam 12 are connected with each other, and the longitudinal beam 11 and the cross beam 12 are configured to support other structural components of the vehicle body structure 10. The longitudinal beams 11 extend into the trunk 13.

Projections of the longitudinal beam 11 and the cross beam 12 on a horizontal plane may be kept perpendicular to each other, and the body frame of the vehicle is formed by interconnecting the longitudinal beam 11 and the cross beam 12. Various subsequent structures are directly or indirectly connected with the body frame combined by the longitudinal beam 11 and the cross beam 12 to form a complete vehicle.

The air pump 15 is connected with the longitudinal beam 11 extending into the trunk 13. The air pump 15 and the air tank 14 are at both sides of the central axis X of the vehicle body structure respectively, and are close to the rear suspension 23.

Since the air pump 15 generates a large amount of vibration during operation, in order to prevent the vibration generated by the air pump 15 from affecting other parts of the vehicle body structure 10 and the riding experience of the vehicle, the requirement for vibration control of the air pump 15 is relatively strict. Since the longitudinal beam 11 is one of the main support structures of the vehicle, and the beam wall of the longitudinal beam is thick and the structure thereof is strong, when the vibration of the air pump 15 is transmitted to the longitudinal beam 11, the longitudinal beam 11 can block most of the vibration, which can achieve a good effect of reducing the vibration. Therefore, the air pump 15 is connected with the longitudinal beam 11, and part of the vibration generated by the air pump 15 can be blocked by the longitudinal beam 11, thereby reducing the influence of the vibration generated by the air pump 15 on the vehicle body structure 10. Further, the riding experience of the vehicle and the operation stability of other systems can be improved.

In addition, FIG. 2 further shows a length direction Y, and the length direction Y is a length direction of the vehicle. The air pump 15 and the air tank 14 are at both sides of the central axis X of the vehicle body structure 10 respectively, i.e., the space occupied by the air pump 15 and the air tank 14 in the vehicle length direction Y is shortened, such that the air pump 15 and the air tank 14 arranged in this way can adapt to various different rear suspension lengths, and the rear suspension length is the length from the center of the rear wheels of the vehicle to the rear end of the vehicle. Therefore, the aforementioned arrangement of the air pump 15 and air tank 14 can adapt to a wider range of vehicle models.

After the air pump 15 and the air tank 14 are arranged according to the above solution, and in the region enclosed by the longitudinal beams 11, the cross beam 12, and the rear enclosure panel 131, there is an available space below the trunk 13. Therefore, as shown in FIG. 1 and FIG. 2, in some embodiments, the trunk 13 may further include an expansion floor 133 and a rear enclosure panel 131 configured to define the expansion portion 132.

In a region enclosed by the longitudinal beams 11, the cross beam 12, and the rear enclosure panel 131, the lower surfaces of the longitudinal beam 11, the cross beam 12, and the rear enclosure panel 131 are connected with the expansion floor 133 and flush with each other. The recessed structure formed by extending the expansion floor 133 downward is used as an expansion portion 132.

The air pump 15 and the air tank 14 are at both sides of the expansion portion 132 along the central axis X respectively.

Specifically, FIG. 1 shows a height direction Z extending vertically. The foregoing expansion portion 132 is a recessed structure extending downward, that is, the expansion portion 132 extends in the direction opposite to the height direction Z, i.e., the expansion portion 132 is a recessed structure extending in the direction opposite to the height direction Z.

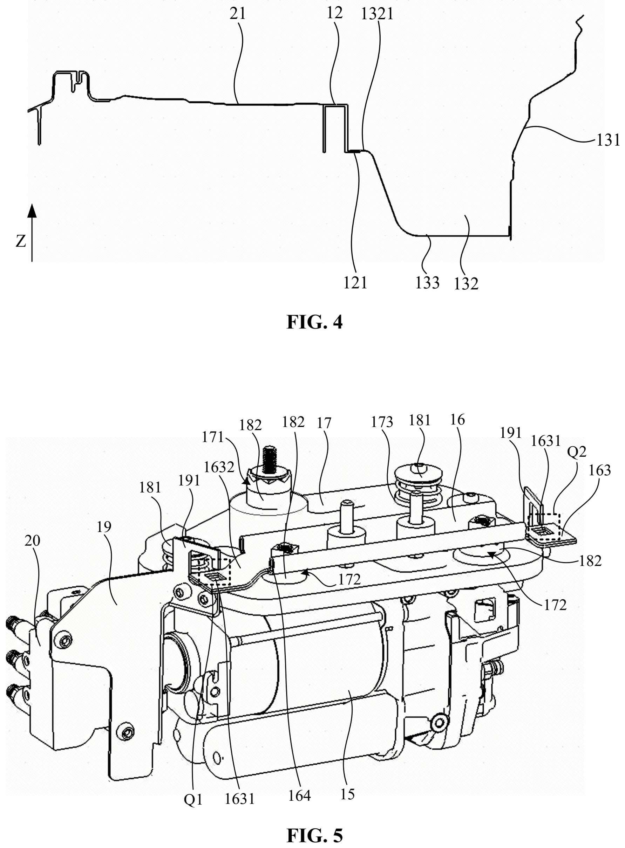

In addition, FIG. 3 shows a cross-sectional view along section line A-A in FIG. 1, and FIG. 4 shows a cross-sectional view along section line B-B in FIG. 1. The expansion portion 132 is a recessed structure extending in the direction opposite to the height direction Z, as shown in FIG. 3 and FIG. 4.

With the above design, the volume of the trunk 13 can be expanded by the expansion portion 132. In addition, the expansion portion 132 is located in the region enclosed by the longitudinal beams 11, the cross beam 12, and the rear enclosure panel 131. Therefore, the expansion portion 132 is closest to the rearmost of the trunk 13, the quantity of structures that may interfere with the expansion portion 132 can be minimized, thereby preventing the expansion portion 132 from excessively interfering with the arrangement of other structures and also preventing other structures from affecting the arrangement of the expansion portion 132. At the same time, since the air tank 14 and the air pump 15 are at both sides of the expansion portion 132along the central axis X respectively, the space behind the rear suspension 23 of the vehicle, i.e., the space on the side of the rear suspension 23 along the length direction Y facing the rearmost of the vehicle, can also be utilized to the greatest extent, which can improve the overall space utilization efficiency of the vehicle.

As an important substructure in the vehicle body structure 10, the air pump 15 generates a large amount of vibration during operation. FIG. 5 shows a schematic diagram of a combination of an air pump 15 and related structures. As shown in FIG. 5, in some embodiments, the vehicle body structure 10 further includes an adapter bracket 16.

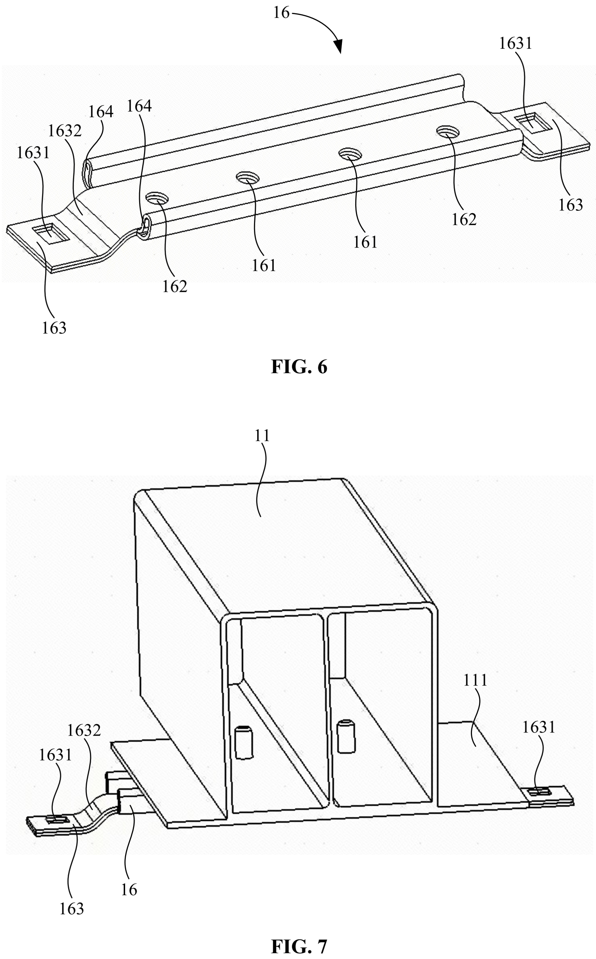

FIG. 6 shows a structure diagram of an adapter bracket 16, and FIG. 7 shows a schematic diagram of a connection between an adapter bracket 16 and a longitudinal beam 11. Referring to FIG. 6 and FIG. 7, the adapter bracket 16 is between the air pump 15 and the longitudinal beam 11, and the adapter bracket 16 includes longitudinal beam connection portions 161 and air pump connection portions 162, e.g., two or more longitudinal beam connection portions 161 and two or more air pump connection portions 162. The air pump connection portion 162 is configured to connect to the air pump 15, and the longitudinal beam connection portion 161 is configured to connect to the longitudinal beam 11.

In the extending direction of the adapter bracket 16 along the longitudinal beam 11, the air pump connection portions 162 are at both sides of all the longitudinal beam connection portions 161, in other words, the longitudinal beam connection portions 161 are sandwiched between the air pump connection portions 162, as shown in FIG. 6.

Although the longitudinal beam 11 already has a better ability to block vibration, and it is also sufficient to mount the air pump 15 on the longitudinal beam 11 through fixing points on the longitudinal beam 11, vibration can be better blocked by providing the adapter bracket 16, i.e., some vibration of the air pump 15 is further blocked by the adapter bracket 16, such that the vehicle body structure 10 can have a better vibration elimination effect, which can further reduce the influence of the vibration generated by the air pump 15 on the vehicle body structure 10.

The length between the fixing points of the air pump 15 can also be expanded by the adapter bracket 16, i.e., the distance between the fixing points of the air pump 15 and the longitudinal beam 11 is expanded to the distance between the air pump connection portions 162, which can thus improve the fixing stability of the air pump 15.

In some embodiments, as shown in FIG. 6, the air pump connection portions 162 and the longitudinal beam connection portions 161 are at a same plane of the adapter bracket 16 and at the same straight line substantially parallel to the length direction of the adapter bracket 16. A cross-section of the adapter bracket 16 perpendicular to the straight line connecting the air pump connection portions 162 and the longitudinal beam connection portions 161 is recess-shaped, and a cavity 164 is provided in a flange of the adapter bracket 16. In some embodiments, the adapter bracket 16 is formed, for example, by stamping a round tube with a thickness of 1.5 mm, but the present disclosure is not limited thereto.

The flanges of the adapter bracket 16 is the structures at two sides of the "recessed" shape.

By arranging the air pump connection portions 162 and the longitudinal beam connection portions 161 at the same plane and at the same straight line, the adapter bracket 16 can better block vibration, such that the vehicle body structure 10 can have a better vibration elimination effect, which can further reduce the influence of the vibration generated by the air pump 15 on the vehicle body structure 10.

In addition, the cross-section of the adapter bracket 16 is "recess-shaped", which can also enhance the strength of the adapter bracket 16, such that the adapter bracket 16 can more stably block vibration while better supporting the air pump 15, to achieve the effect of eliminating vibration. The flange of the adapter bracket 16 is provided with a cavity 164, which can improve the ability of the adapter bracket 16 to resist vibration deformation, which can further enhance the ability of the adapter bracket 16 to block vibration transmission.

In some embodiments, the vehicle body structure 10 further includes an air pump bracket 17.

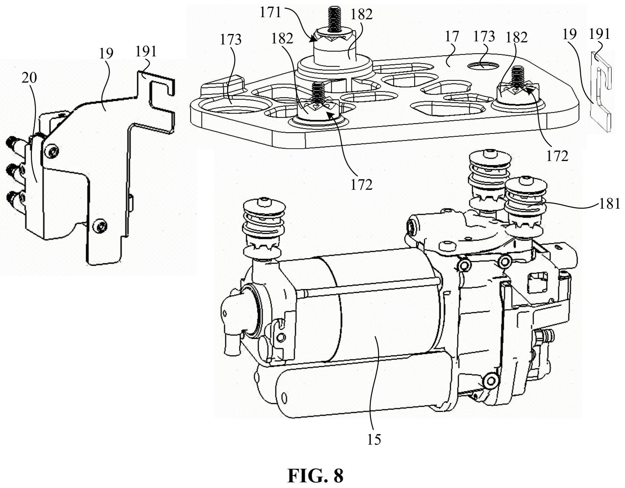

FIG. 8 shows an exploded view of the assembly in FIG. 5 except for the adapter bracket 16. As shown in FIG. 8, the air pump bracket 17 includes a first fitting portion 171, second fitting portions 172, and third fitting portions 173. The first fitting portion 171 is connected with the longitudinal beam 11. The second fitting portions 172 are connected with the adapter bracket 16. The third fitting portions 173 are connected with the air pump 15.

By connecting the air pump 15 with the air pump bracket 17, a smaller area where the air pump 15 can provide to fit with other parts can be replaced with a larger area, which can thus reduce the connection difficulty of the air pump 15 and improve the assembling stability of the air pump 15.

Lines connecting projections of the first fitting portion 171 and the second fitting portions 172 onto the same plane form a triangle.

Since the lines connecting projections of the first fitting portion 171 and the second fitting portions 172 onto the same plane form a triangle, and the triangular structure has high stability, the assembling stability of the air pump bracket 17 can be improved, which can further improve the assembling stability of the air pump 15.

In some embodiments, as shown in FIG. 5 and FIG. 8, the vehicle body structure 10 further includes a first vibration isolation structure 181 and a second vibration isolation structure 182.

The first vibration isolation structure 181 is between the air pump 15 and the air pump bracket 17. The second vibration isolation structure 182 is between the first fitting portion 171 of the air pump bracket 17 and the longitudinal beam 11, and between the second fitting portion 172 of the air pump bracket 17 and the adapter bracket 16.

It should be noted that, the first vibration isolation structure 181 being between the air pump 15 and the air pump bracket 17 means that the first vibration isolation structure 181 is between the structure of the air pump 15 and the structure of the air pump bracket 17. As shown in FIG. 5 and FIG. 8, the first vibration isolation structure 181 is at the side of the air pump bracket 17 away from most of the structure of the air pump 15, however, the first vibration isolation structure 181 is on the mounting structure extending from the air pump 15, and the mounting structure finally passes through the air pump bracket 17, such that the first vibration isolation structure 181 abuts to the mounting structure extending from the air pump 15 and the air pump bracket 17, therefore, the first vibration isolation structure 181 is still between the air pump 15 and the air pump bracket 17.

Similarly, the second vibration isolation structure 182 is between the first fitting portion 171 of the air pump bracket 17 and the longitudinal beam 11, and between the second fitting portion 172 of the air pump bracket 17 and the adapter bracket 16, which means that the second vibration isolation structure 182 is between the structure of the first fitting portion 171 of the air pump bracket 17 and the structure of the longitudinal beam 11, and between the structure of the second fitting portion 172 of the air pump bracket 17 and the structure of the adapter bracket 16. As shown in FIG. 5 and FIG. 8, the first fitting portion 171 and the second fitting portion 172 are provided with the second vibration isolation structure 182 respectively, when the first fitting portion 171 is connected with the longitudinal beam 11, the second vibration isolation structure 182 abuts to the longitudinal beam 11, to reduce the vibration when the first fitting portion 171 is connected with the longitudinal beam 11; when the second fitting portion 172 is connected with the adapter bracket 16, the second vibration isolation structure 182 abuts to the air pump connection portion 162 of the adapter bracket 16, to reduce the vibration when the second fitting portion 172 is connected with the adapter bracket 16.

The first vibration isolation structure 181 includes a composite structure of a spring and a rubber bushing, and the second vibration isolation structure 182 includes a rubber bushing.

With such a design, the vibration of different parts can be blocked by different vibration isolation structures. Since the vibration amount between the air pump 15 and the air pump bracket 17 is larger than the vibration amount between the adapter bracket 16 and the longitudinal beam 11, the composite structure of the spring and the rubber bushing is used between the air pump 15 and the air pump bracket 17 to block the vibration.

Since the vibration amount between the adapter bracket 16 and the longitudinal beam 11 is small, the vibration can be blocked between the adapter bracket 16 and the longitudinal beam 11 by a rubber bushing structure with a relatively weak vibration blocking capability, and meanwhile, since the cost of using the rubber bushing structure is also lower than that of the composite structure of the spring and the rubber bushing, the cost can be further saved while meeting the requirements of vibration control.

The arrangement of the first vibration isolation structure 181 and the second vibration isolation structure 182 can better block the vibration generated by the air pump 15, such that the vehicle body structure 10 can have a better vibration elimination effect, to further improve the riding experience of the vehicle and the operation stability of other systems.

In some embodiments, as shown in FIG. 5 and FIG. 8, the vehicle body structure 10 further includes hitching brackets 19.

The hitching brackets 19 are mounted at both sides of the air pump bracket 17, and the hitching brackets 19 and the second fitting portions 172 are on the same straight line. The hitching bracket 19 includes a hook portion 191 extending upward to form a hook shape.

In some embodiments, the hitching brackets 19 and the second fitting portions 172 are at the same straight line, i.e., the main structures of the hitching brackets 19 and the main structures of the second fitting portions 172 are at the same straight line.

The adapter bracket 16 further includes hitching fitting portions 163. The hitching fitting portions 163 are at both sides of all the air pump connection portions 162, and the air pump connection portion 162 is between the hitching fitting portion 163 and the longitudinal beam connection portion 161. The hitching fitting portion 163 is provided with an opening 1631, and the hook portion 191 and the opening 1631 of the hitching fitting portion 163 are correspondingly fitted when assembled.

By providing the hook portion 191 and the hitching fitting portion 163 that are correspondingly fitted, upon obtaining the first intermediate structure by connecting the air pump 15 and the air pump bracket 17, as well as the hitching bracket 19, and upon obtaining the second intermediate structure by connecting the adapter bracket 16 and the longitudinal beam 11, when the two intermediate structures are assembled and fitted, the hook portion 191 can be hung into the opening 1631 of the hitching fitting portion 163, such that workers can be prevented from lifting the air pump 15 and the air pump bracket 17 all the time during assembly, thereby reducing worker fatigue and improving assembly efficiency. In addition, when automated assembly is used, such a design can also avoid providing a special mechanical structure for lifting, such that the mechanical structure for performing assembly can be simplified, which can reduce costs.

In some embodiments, as shown in FIG. 5 and FIG. 8, the vehicle body structure 10 further includes a distribution valve 20.

The distribution valve 20 is at the hitching bracket 19, and is configured to direct an airflow generated by the air pump 15 into different pneumatic circuits.

By providing the distribution valve 20 at the hitching bracket 19, before performing the connection of the air pump bracket 17 and the adapter bracket 16 as well as the longitudinal beam 11, the distribution valve 20 can be connected with the air pump 15, and since there is no interference from other vehicle body structural parts during assembling at this time, the connection accuracy between the distribution valve 20 and the air pump 15 can be improved, which can improve the performance such as air tightness between the distribution valve 20 and the air pump 15, and further improve the working stability of the air pump 15 and the pneumatic circuit connected thereto.

In addition, the space occupied by the distribution valve 20, the air pump 15 and the air tank 14 in the length direction Y can also be further shortened, such that such a design of the air pump 15 and the air tank 14 can further adapt to a greater variety of different rear suspension lengths, and further adapt to a wider range of vehicle models.

In some embodiments, as shown in FIG. 5 and FIG. 6, the height of the hitching fitting portion 163 is lower than that of the air pump connection portion 162 and the longitudinal beam connection portion 161. After assembling is completed, a clearance distance is maintained between the hook portion 191 and the hitching fitting portion 163.

In some embodiments, in the case of region Q1 and region Q2 as shown in FIG. 5, a clearance distance is maintained between the hook portion 191 and the hitching fitting portion 163, which can avoid that, when the air pump 15 generates vibration, the hook portion 191 abuts to the hitching fitting portion 163 to affect the role of various vibration isolation designs. The specific length of the clearance distance may be flexibly set according to actual needs.

With such a design, a fitting space may be reserved for the hook portion 191, such that the hook portion 191 is more easily fitted with the hitching fitting portion 163, which can thus improve the ease of the assembling operation.

The hitching fitting portion 163 includes an inclined connection structure 1632, and is connected with the air pump connection portion 162 through the inclined connection structure 1632.

By providing the inclined connection structure 1632, the downward force exerted by the air pump 15 and associated structures connected thereto on the hitching fitting portion 163 can be decomposed, such that the bending force perpendicular to the surface of the inclined connection structure 1632 can be reduced, which can further improve the strength of the inclined connection structure 1632 and improve the mounting stability in the assembly process.

In some embodiments, as shown in FIG. 1, the vehicle body structure 10 further includes: a base plate 21 and a cover plate 22.

The base plate 21 is on top of the cross beam 12 and the longitudinal beams 11, and is at a side of the cross beam 12 away from the expansion portion 132, with the cross beam 12 being in contact with the expansion portion 132.

The cover plate 22 is detachably on top of the cross beam 12 and the longitudinal beams 11, and is at a side of the cross beam 12 facing the expansion portion 132, with the cross beam 12 being in contact with the expansion portion 132. The cover plate 22 is flush with the base plate 21.

Since the expansion portion 132 is a downward recessed structure, when placing some goods that needs a large plane for placement, the downward recessed expansion portion 132 have an adverse effect on placement. By providing the cover plate 22 flush with the base plate 21, the expansion portion 132 can be temporarily closed in this case, and a flat placement space is left, which may enable users to flexibly choose different placement space modes of the trunk 13 according to actual situations.

In some embodiments, as shown in FIG. 1, FIG. 3, FIG. 4, and FIG. 7, the longitudinal beam 11 includes a first lap flange 111, the cross beam 12 includes a third lap flange 121, the first lap flange 111 extends out from the bottom of the longitudinal beam 11, and the third lap flange 121 extends out from the bottom of the cross beam 12.

Specifically, the cross beam 12 and the longitudinal beam 11 may be elongated structures with a rectangular cross-section, which include opposite upper surfaces and opposite lower surfaces, i.e., in the height direction Z, the surfaces located above is an upper surface of the cross beam 12 and an upper surface of the longitudinal beam 11, and the surfaces located below is a lower surface of the cross beam 12 and a lower surface of the longitudinal beam 11. The first lap flange 111 is a surface structure of the longitudinal beam 11 that extends out from the lower surface of the longitudinal beam 11, and the third lap flange 121 is a surface structure of the cross beam 12 that extends out from the lower surface of the cross beam 12, which may refer to FIG. 4 and FIG. 7 for more details.

The expansion floor 133 includes a second lap flange 1321, and the second lap flange 1321 extends out from the top end of the expansion portion 132. The second lap flange 1321 is at top of the first lap flange 111 and the third lap flange 121, and is in lap-joint fit with the first lap flange 111 and the third lap flange 121.

In some embodiments, the second lap flange 1321 is a portion of the expansion floor 133 other than the portion to form expansion portion 132.

In addition, at the lap fit positions of the first lap flange 111 and the third lap flange 121 with the second lap flange 1321, the process adopted for the first lap flange 111 with the second lap flange 1321 may include: riveting fitting, sealant filling, or both at the same time, but are not limited thereto. Similarly, the process adopted for the second lap flange 121 with the second lap flange 1321 may include: riveting fitting, sealant filling, or both at the same time, but are not limited thereto.

It should be noted that the first lap flange 111, the third lap flange 121 and the second lap flange 1321 are only for convenience of description, and in fact, the first lap flange 111 and the longitudinal beam 11, the third lap flange 121 and the cross beam 12, and the second lap flange 1321 and the expansion portion 132, each of which is integrally formed.

With such a design, the fittings of the expansion portion 132 with the cross beam 12 and the longitudinal beam 11 can be better achieved, which can improve the stability of the fittings of the expansion portion 132 with the cross beam 12 and the longitudinal beam 11.

The present disclosure further provides a vehicle. The vehicle includes any one of the vehicle body structures 10 described above. In addition, the power system of the vehicle does not include a tailpipe muffler structure. For example, the vehicle may be a pure electric vehicle, but is not limited thereto, and the vehicle may be other vehicles that do not need to provide a tailpipe muffler structure.

With such a design, the interference between the provided expansion portion 132 and the tailpipe muffler structure can be avoided, such that the trunk of the vehicle can be expanded through the expansion portion 132 without affecting the operation of the vehicle.

The foregoing embodiments of the present disclosure may complement each other without causing a conflict.

It should be noted that, in the drawings, the sizes of layers and regions may be exaggerated for clarity of illustration. It may also be understood that, when an element or layer is referred to as being "on" another element or layer, it may be directly on the other element or an intermediate layer may be present. In addition, it may be understood that, when an element or layer is referred to as being "under" another element or layer, it may be directly beneath the other element, or more than one intermediate layer or element may be present. In addition, it will also be understood that when a layer or element is referred to as being "between" two layers or elements, it can be the only layer between the two layers or elements, or there may be more than one intermediate layer or element. Like reference numerals refer to like elements throughout.

The term "a plurality of" refers to two or more, unless otherwise specified.

Other embodiments of the present application will readily occur to those skilled in the art upon consideration of the specification and practice of the disclosure disclosed herein. The present application is intended to cover any modifications, uses, or adaptations of the present application that follow the general principles of the present application and include common knowledge or conventional technical means in the art not disclosed in the present application. It is intended that the specification and examples be considered as exemplary only, with a true scope and spirit of the disclosure being indicated by the following claims.

It should be understood that, the present disclosure is not limited to the precise structures described above and shown in the accompanying drawings, and various modifications and changes may be made without departing from the scope thereof. The scope of the present application is limited only by the appended claims.

## Claims

1. A vehicle body structure (10), comprising longitudinal beams (11), a cross beam (12), a trunk (13), an air tank (14), an air pump (15), and a rear suspension (23); wherein
the longitudinal beams (11) and the cross beam (12) are connected with each other, and the longitudinal beams (11) extend into the trunk (13);
the air pump (15) is connected with one of the longitudinal beams (11) extending into the trunk (13); and
the air pump (15) and the air tank (14) are at both sides of a central axis (X) of the vehicle body structure (10) respectively, and are located close to the rear suspension (23).

2. The vehicle body structure (10) according to claim 1, wherein the trunk (13) comprises an expansion floor (133) and a rear enclosure panel (131);
the rear enclosure panel (131) is connected with an end of the longitudinal beam (11);
in a region enclosed by the longitudinal beams (11), the cross beam (12), and the rear enclosure panel (131), lower surfaces of the longitudinal beams (11), the cross beam (12), and the rear enclosure panel (131) are connected with the expansion floor (133) and flush with each other; and
a recessed structure formed by extending the expansion floor (133) downward is used as an expansion portion (132), and the air pump (15) and the air tank (14) are at both sides of the expansion portion (132) along the central axis (X) respectively.

3. The vehicle body structure (10) according to claim 1, further comprising: an adapter bracket (16);
the adapter bracket (16) is between the air pump (15) and the longitudinal beam (11), and the adapter bracket (16) comprises air pump connection portions (162) and longitudinal beam connection portions (161);
the air pump connection portions (162) are connected with the air pump (15), and the longitudinal beam connection portions (161) are connected with the longitudinal beam (11); and
the air pump connection portions (162) are at both sides of all the longitudinal beam connection portions (161).

4. The vehicle body structure (10) according to claim 3, wherein the air pump connection portions (162) and the longitudinal beam connection portions (161) are at a same plane and at a same straight line; and
a cross-section of the adapter bracket (16) perpendicular to the straight line connecting the air pump connection portions (162) and the longitudinal beam connection portions (161) is recess-shaped, and a cavity (164) is provided in a flange of the adapter bracket (16).

5. The vehicle body structure (10) according to claim 3, further comprising: an air pump bracket (17);
the air pump bracket (17) comprises a first fitting portion (171), second fitting portions (172), and third fitting portions (173);
the first fitting portion (171) is connected with the longitudinal beam (11);
the second fitting portions (172) are connected with the adapter bracket (16);
the third fitting portions (173) are connected with the air pump (15); and
lines connecting projections of the first fitting portion (171) and the second fitting portions (172) onto a same plane form a triangle.

6. The vehicle body structure (10) according to claim 5, further comprising: a first vibration isolation structure (181) and a second vibration isolation structure (182);
the first vibration isolation structure (181) is between the air pump (15) and the air pump bracket (17);
the second vibration isolation structure (182) is between the first fitting portion (171) of the air pump bracket (17) and the longitudinal beam (11), and between the second fitting portion (172) of the air pump bracket (17) and the adapter bracket (16); and
the first vibration isolation structure (181) comprises a composite structure of a spring and a rubber bushing, and the second vibration isolation structure (182) comprises a rubber bushing.

7. The vehicle body structure (10) according to claim 5, further comprising: hitching brackets (19);
the hitching brackets (19) are mounted at both sides of the air pump bracket (17), and the hitching brackets (19) and the second fitting portions (172) are at a same straight line;
the hitching bracket (19) comprises a hook portion (191) extending upward with a hook shape;
the adapter bracket (16) further comprises hitching fitting portions (163);
the hitching fitting portions (163) are at both sides of all the air pump connection portions (162), and the air pump connection portion (162) is between the hitching fitting portion (163) and the longitudinal beam connection portion (161); and
the hitching fitting portion (163) is provided with an opening (1631), and the hook portion (191) and the opening (1631) of the hitching fitting portion (163) are correspondingly fitted when assembled.

8. The vehicle body structure (10) according to claim 7, wherein a height of the hitching fitting portion (163) is lower than a height of the air pump connection portion (162) and a height of the longitudinal beam connection portion (161);
after assembling is completed, a clearance distance is maintained between the hook portion (191) and the hitching fitting portion (163); and
the hitching fitting portion (163) comprises an inclined connection structure (1632), and is connected with the air pump connection portion (162) through the inclined connection structure (1632).

9. The vehicle body structure (10) according to claim 7, further comprising: a distribution valve (20),
the distribution valve (20) is on the hitching bracket (19), and is configured to direct an airflow generated by the air pump (15) into different pneumatic circuits.

10. The vehicle body structure (10) according to claim 2, further comprising: a base plate (21) and a cover plate (22);
the base plate (21) is on top of the cross beam (12) and the longitudinal beams (11), and is at a side of the cross beam (12) away from the expansion portion (132), with the cross beam (12) being in contact with the expansion portion (132);
the cover plate (22) is detachably on top of the cross beam (12) and the longitudinal beams (11), and is at a side of the cross beam (12) facing the expansion portion (132), with the cross beam (12) being in contact with the expansion portion (132); and
the cover plate (22) is flush with the base plate (21).

11. The vehicle body structure (10) according to claim 1, wherein
each of the longitudinal beams (11) comprises a first lap flange (111) extending from a bottom of the longitudinal beam (11);
the cross beam (12) comprises a third lap flange (121) extending from a bottom of the cross beam (12); and
the expansion floor (133) comprises a second lap flange (1321) of the expansion portion (132) extending from a top end of the expansion portion (132), and the second lap flange (1321) is configured to be in lap-joint fit with the first lap flange (111) and the third lap flange (121) to fix the expansion portion (132).

12. The vehicle body structure (10) according to claim 11, wherein the first lap flange (111) and the longitudinal beam (11), the third lap flange (121) and the cross beam (12), and the second lap flange (1321) and the expansion portion (132) are integrally formed, respectively.

13. A vehicle, comprising the vehicle body structure (10) according to any one of claims 1 to 12, and a power system of the vehicle without a tailpipe muffler structure.
